(19) Europäisches Patentamt
European Patent Office
Office européen des brevets

(11) **EP 4 148 403 A1**

(12) **EUROPEAN PATENT APPLICATION**
published in accordance with Art. 153(4) EPC

(43) Date of publication:
**15.03.2023 Bulletin 2023/11**

(51) International Patent Classification (IPC):
**G01K 7/00** (2006.01)

(21) Application number: **21804859.3**

(86) International application number:
**PCT/CN2021/085931**

(22) Date of filing: **08.04.2021**

(87) International publication number:
**WO 2021/227711 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2020 CN 202010393928**

(71) Applicant: **GUANGDONG OPPO MOBILE
TELECOMMUNICATIONS
CORP., LTD.
Dongguan, Guangdong 523860 (CN)**

(72) Inventor: **LIU, Jun
Dongguan, Guangdong 523860 (CN)**

(74) Representative: **Taor, Simon Edward William et al
Venner Shipley LLP
200 Aldersgate
London EC1A 4HD (GB)**

(54) **TEMPERATURE MEASUREMENT CIRCUIT**

(57) Provided is a temperature measurement circuit. The temperature measurement circuit includes a comparator (31), a first voltage generation circuit (32), and a second voltage generation circuit (33). Inputs of the comparator (31) are connected to a voltage output of the first voltage generation circuit (32) and a voltage output of the second voltage generation circuit (33), respectively, to obtain a reference voltage and a comparison voltage. A comparison result is outputted, and an ambient temperature is determined based on the comparison result. The second voltage generation circuit (33) includes a current generation circuit (331) configured to generate a current signal correlated to the ambient temperature, and a current-to-voltage conversion circuit (332) configured to convert the current signal into the comparison voltage. In this way, through characterizing the ambient temperature with the current signal correlated to the ambient temperature, a temperature measurement result can be obtained by sampling and processing the current signal. A large number of capacitors, which is required during the sampling and processing of the current signal in an existing temperature measurement circuit, can be omitted, and thus an area of the temperature measurement circuit can be effectively reduced.

FIG. 3

EP 4 148 403 A1

## Description

## CROSS-REFERENCE TO RELATED APPLICATIONS

This application is based on and claims a priority to prior Chinese Patent Application No. 202010393928.6, filed on May 11, 2020 and entitled "TEMPERATURE MEASUREMENT CIRCUIT", the entire disclosure of which is incorporated herein by reference.

## TECHNICAL FIELD

The present disclosure relates to temperature measurement technologies, and more particularly, to a temperature measurement circuit.

## BACKGROUND

A Temperature Sensor (TPS) is a circuit configured to convert a temperature into a readable binary code. Temperature monitoring of an integrated circuit chip is of great importance to prevent the chip from being irreversible damaged under a high temperature. In addition, chip performance can be regulated by monitoring the temperature of the integrated circuit chip. In recent years, with a rapid development of a large-scale integrated circuit and the advance in a manufacturing process, the temperature sensor has an increasingly wider commercial application scope. Since temperatures of different nodes inside the chip are not the same, some chips may have a plurality of temperature sensors placed therein to monitor the temperatures of different nodes.

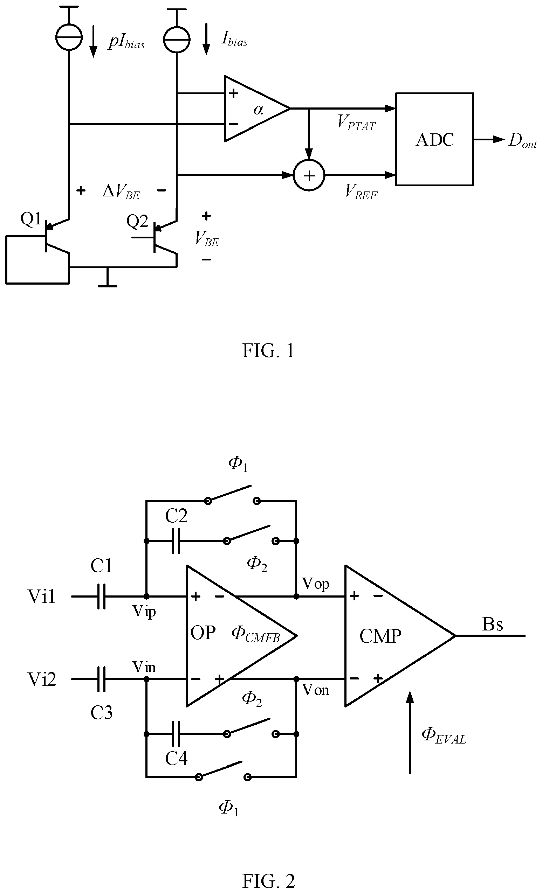

FIG. 1 is a schematic diagram illustrating a theoretical structure of a conventional temperature sensor. In FIG. 1, an emitting electrode of a triode **Q1** is connected to a bias current **pIbias** and an emitting electrode of a triode **Q2** is connected to a bias current **Ibias,** to ensure that an amplifier operates in a linear range. A base electrode and a collector of the **Q1** are grounded. A base electrode and a collector of the **Q2** are grounded. $\Delta V_{BE}$ has a positive temperature coefficient, namely $V_{PTAT}$. $V_{BE}$ has a negative temperature coefficient, namely $V_{CTAT}$. Provided that a duty cycle of an output signal **Dout** of an Analog-to-Digital Converter (ADC) is defined as $\mu$, when **Dout** = 1, the ADC is controlled by a feedback signal to sample and integrate $V_{BE}$; and when **Dout** = 0, the ADC is controlled by the feedback signal to sample and integrate $\alpha\Delta V_{BE}$. Sampling integration values of two stages of the ADC are ultimately equal, i.e., $\mu \cdot V_{BE} = (1 - \mu) \cdot \alpha\Delta V_{BE}$. Therefore, it can be obtained that $\mu = \alpha\Delta V_{BE}/(V_{BE} + \alpha\Delta V_{BE}) = \alpha\Delta V_{BE}/V_{REF}$, where the duty cycle $\mu$ characterizes a temperature of a tested point.

FIG. 2 is a schematic diagram illustrating a theoretical structure of a conventional ADC circuit. In the ADC, many capacitors, theoretically as illustrated in FIG. 2, may be used for sampling and integration. In FIG. 2, **Vi1** and **Vi2** correspond to $V_{PTAT}$ and **VREF** in FIG. 1, respectively; **C1/C3** are sampling capacitors; **C2/C4** are integrating capacitors; **Ø1**, as a sampling clock, and **Ø2**, as an integrating clock, are two-phase non-overlapping clocks; **Ø$_{CMFB}$** is a common-mode feedback clock of an Operation Amplifier (OP); **Ø$_{EVAL}$** is a clock for controlling an output of a Comparator (CMP); and **Bs** is an outputted single-bit code stream. Generally, $\alpha$ times in the previous equation will be achieved on **C1/C3.** In practical applications, many capacitors connected in parallel may be required to achieve a total **C1/C3.** The total number of **C1/C3** is usually chosen to a power of 2, e.g., 8, 16, etc. The relatively large number of capacitors used in the conventional temperature sensor occupies a relatively large space of the chip and leads to high chip costs.

## SUMMARY

To solve the above technical problems, embodiments of the present disclosure provide a temperature measurement circuit.

Implementations of technical solutions of the present disclosure are provided below. A temperature measurement circuit is provided. The temperature measurement circuit includes a comparator, a first voltage generation circuit, and a second voltage generation circuit. A first input of the comparator is connected to an output of the first voltage generation circuit and is configured to obtain a reference voltage outputted by the first voltage generation circuit. A second input of the comparator is connected to an output of the second voltage generation circuit and is configured to obtain a comparison voltage outputted by the second voltage generation circuit. An output of the comparator is configured to output a comparison result. Am ambient temperature is determined based on the comparison result. The second voltage generation circuit includes a current generation circuit configured to generate a current signal correlated to the ambient temperature, and a current-to-voltage conversion circuit configured to convert the current signal into the comparison voltage.

The embodiments of the present disclosure provide the temperature measurement circuit, including the comparator, the first voltage generation circuit, and the second voltage generation circuit. The first input of the comparator is connected to the output of the first voltage generation circuit and is configured to obtain the reference voltage outputted by the first voltage generation circuit. The second input of the comparator is connected to the output of the second voltage generation circuit and is configured to obtain the comparison voltage outputted by the second voltage generation circuit. The output of the comparator is configured to output the comparison result. The ambient temperature is determined based on the comparison result. The second voltage generation circuit includes the current generation circuit configured to generate the current signal correlated to the ambient temperature, and the current-to-voltage conversion circuit configured to convert the current signal into the comparison voltage. In this way, through characterizing the ambient temperature with the current signal correlated to the ambient temperature, a temperature measurement result can be obtained by sampling and processing the current signal. A large number of capacitors, which is required during the sampling and processing of the current signal in an existing temperature measurement circuit, can be omitted, and thus an area of the temperature measurement circuit can be effectively reduced.

## BRIEF DESCRIPTION OF DRAWINGS

FIG. 1 is a schematic diagram illustrating a theoretical structure of a conventional temperature sensor.
FIG. 2 is a schematic diagram illustrating a theoretical structure of a conventional ADC circuit.
FIG. 3 is a schematic diagram illustrating a first theoretical structure of a temperature measurement circuit according to an embodiment of the present disclosure.
FIG. 4 is a schematic diagram illustrating a second theoretical structure of a temperature measurement circuit according to an embodiment of the present disclosure.
FIG. 5 is a schematic diagram illustrating a third theoretical structure of a temperature measurement circuit according to an embodiment of the present disclosure.
FIG. 6 is a schematic diagram illustrating a fourth theoretical structure of a temperature measurement circuit according to an embodiment of the present disclosure.
FIG. 7 is a schematic structural diagram of a first bandgap reference circuit according to an embodiment of the present disclosure.
FIG. 8 is a schematic structural diagram of a second bandgap reference circuit according to an embodiment of the present disclosure.

## DESCRIPTION OF EMBODIMENTS

In order to provide a more detailed understanding of features and technical content of the present disclosure, implementations of the embodiments of the present disclosure will be described in detail below with reference to the accompanying drawings. The accompanying drawings are used for reference and illustration only, rather than limiting the embodiments of the present disclosure.

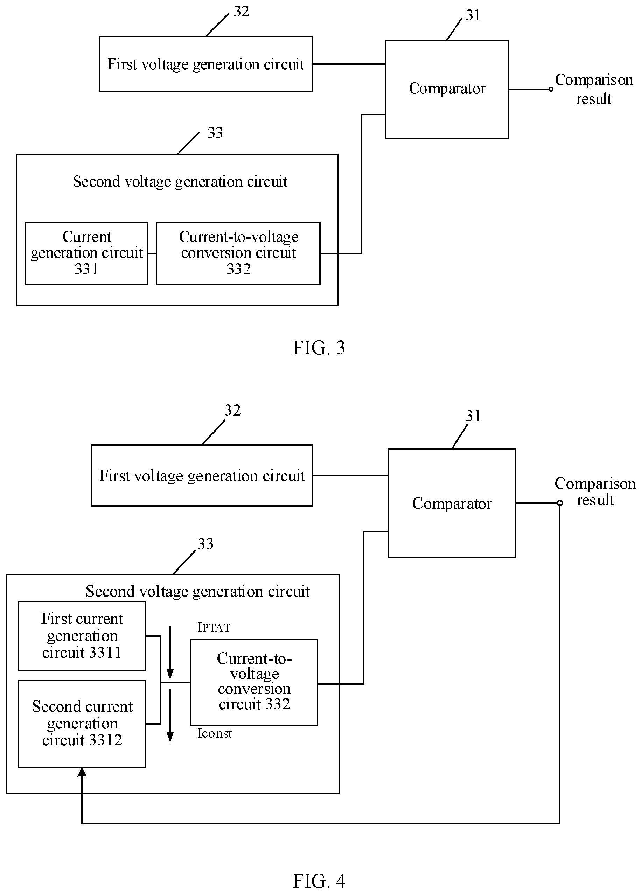

An embodiment of the present disclosure provides a temperature measurement circuit. FIG. 3 is a schematic diagram illustrating a first theoretical structure of a temperature measurement circuit according to an embodiment of the present disclosure. As illustrated in FIG. 3, the temperature measurement circuit includes a comparator 31, a first voltage generation circuit 32, and a second voltage generation circuit 33. A first input of the comparator 31 is connected to an output of the first voltage generation circuit 32 to obtain a reference voltage outputted by the first voltage generation circuit 32. A second input of the comparator 31 is connected to an output of the second voltage generation circuit 33 to obtain a comparison voltage outputted by the second voltage generation circuit 33. An output of the comparator 31 is configured to output a comparison result. An ambient temperature is determined based on the comparison result.

The second voltage generation circuit 33 includes a current generation circuit 331 and a current-to-voltage conversion circuit 332. The current generation circuit 331 is configured to generate a current signal correlated to the ambient temperature. The current-to-voltage conversion circuit 332 is configured to convert the current signal into the comparison voltage.

In a practical application, the comparator may be regarded as a 1-bit Analog-to-Digital Converter (ADC). A first output of the comparator serves as an inverting input, and a fixed reference voltage **Vref** is applied to the inverting input. A second input of the comparator serves as a non-inverting input, and a comparison voltage **Vin** is applied to the non-inverting input. A comparison result bs is outputted by an output of the comparator. When **Vin** is greater than **Vref, bs** is a high level 1. When **Vin** is smaller than **Vref, bs** is a low level 0.

The comparison voltage **Vin** is converted based on a current signal correlated to a temperature. The number of capacitors required for the sampling and converting of the current signal is smaller than the number of capacitors required by the ADC to sample and process a voltage signal. Therefore, the above embodiment of the present disclosure provides a new voltage generation circuit, capable of reducing the number of capacitors in the entire temperature measurement circuit.

The reference voltage **Vref** is a voltage, which can be always maintained at a constant value, and a magnitude of which can be determined as desired. Therefore, the first voltage generation circuit includes a voltage stabilization source and a voltage stabilization circuit. The voltage stabilization source can generate a baseline voltage uncorrelated to the temperature. The voltage stabilization circuit can maintain the baseline voltage at the constant value, i.e., the reference voltage. In this way, a voltage fluctuation due to circuit switching or the like can be avoided, to ensure stability of the reference voltage.

FIG. 4 is a schematic diagram illustrating a second theoretical structure of a temperature measurement circuit according to an embodiment of the present disclosure. In FIG. 4, a specific second voltage generation circuit is provided based on the above embodiment. As illustrated in FIG. 4, the temperature measurement circuit includes a comparator 31, a first voltage generation circuit 32, and a second voltage generation circuit 33.

The second voltage generation circuit 33 includes a current generation circuit 331 and a current-to-voltage conversion circuit 332.

The current generation circuit 331 includes a first current generation circuit 3311 and a second current generation circuit 3312. The first current generation circuit 3311 is configured to output a first current **11** correlated to the ambient temperature. The second current generation circuit 3312 is configured to output a second current **I2** uncorrelated to the ambient temperature.

A current input of the current-to-voltage conversion circuit 332 is connected to a current output of the first current generation circuit 3311 and a current output of the second current generation circuit 3312. The current-to-voltage conversion circuit 332 is configured to convert a summed current of the first current and the second current into the comparison voltage.

In some embodiments, the output of the comparator 31 is connected to a current control of the second current generation circuit 3312 and configured to control, based on the comparison result, the second current generation circuit 3312 to output a second current.

That is, the output of the second current is controlled by high- or low-level signals outputted by the comparator to begin or to stop. For example, when the comparison voltage is greater than the reference voltage, the comparison result is a high level, and the second current is controlled to output; and when the comparison voltage is smaller than the reference voltage, the comparison result is a low level, and the output of the second current is controlled to be stopped. That is, when the output of the second current begins, the comparison voltage may be lowered to a voltage lower than the reference voltage; and when the output of the second current is stopped, the comparison voltage may be boosted to a voltage greater than the reference voltage.

For example, the current-to-voltage conversion circuit may be a circuit having a charging and discharging function. The current-to-voltage conversion circuit may be charged by the first current and discharged by the second current. The first current flows into the current-to-voltage conversion circuit from the current input, and the second current flows out of the current-to-voltage conversion circuit from the current input. When the first current and the second current present at the same time, a current at the current input is the summed current of the first current and the second current, and has a current direction same as a direction of a heavy current.

In some embodiments, the current-to-voltage conversion circuit includes a first capacitor. The first capacitor has a first end serving as the current input of the current-to-voltage conversion circuit, and a second end that is grounded. When the comparison result is a low level, an output of the second current is stopped such that the first capacitor is charged with the first current, until a voltage of the first capacitor is greater than the reference voltage and the comparison result changes to a high level. When the comparison result is a high level, the second current is outputted, such that the first capacitor is charged with the first current and the first capacitor is discharged with the second current, until the voltage of the first capacitor is smaller than the reference voltage and the comparison result changes to the low level.

For example, the reference voltage is 1.2v. When an output **bs** of the comparator is 0, the output of the second current is controlled by **bs** to stop and the first capacitor is charged by the first current **11,** until the first capacitor is charged to 1.2 V, a charging time is hypothetically defined as **t0.** Then, an output of the comparator is flipped to allow **bs** to be equal to 1, to output the second current controlled by **bs,** the first capacitor is discharged and charged simultaneously. In this case, a charging current is still the first current **11** while a discharging current is the second current **I2**, and a discharging time is hypothetically defined as **t1.** The overall charging charges are equal to the overall discharging charges, i.e., t0*l1=t1*(l2-l1). Therefore, it can be obtained that a duty cycle $\mu$ of **bs** at the output satisfies $\mu$=t1/(t0+t1)=l1/l2. Since **11** represents that the temperature **I2** is uncorrelated to the temperature, and the duty cycle of the output **bs** also represents the temperature, the ambient temperature can be determined based on the duty cycle of **bs.**

That is, the first capacitor achieves a conversion between a current and a voltage. The current temperature is characterized by the charging and discharging time of the first capacitor, and the output of the second current is controlled by providing, to the second current generation circuit, feedback of the comparison result, such that a closed-loop control can be formed by the temperature measurement circuit to improve accuracy of a temperature measurement.

In some embodiments, the first current generation circuit includes a first bandgap reference circuit configured to generate the first current.

In some embodiments, the first bandgap reference circuit is further configured to generate a baseline voltage uncorrelated to the ambient temperature; and a voltage input of the first voltage generation circuit is connected to a voltage output of the first bandgap reference circuit, to obtain the reference voltage by performing a voltage regulation on the baseline voltage.

That is, the first bandgap reference circuit may serve as the voltage stabilization source for the first voltage generation circuit and outputs a generated baseline voltage to the voltage stabilization circuit. The voltage stabilization circuit can maintain the baseline voltage at the constant value, i.e., the reference voltage. In this way, problems such as a voltage fluctuation due to circuit switching or the like can be avoided to ensure stability of the reference voltage.

In some other embodiments, the voltage stabilization source of the first voltage generation circuit is a third bandgap reference circuit configured to generate a baseline voltage uncorrelated to the ambient temperature.

In some embodiments, the second current generation circuit includes a second bandgap reference circuit and a current mirror circuit. The second bandgap reference circuit is configured to: generate the second current; and mirror, through the current mirror circuit, the generated second current to the current input of the current-to-voltage conversion circuit.

For example, the current mirror circuit includes a first field effect transistor and a second field effect transistor that are connected in a mirroring arrangement. A current output of the second bandgap reference circuit is connected to a gate electrode and a drain electrode of the first field effect transistor. The drain electrode of the first field effect transistor is connected to a first voltage source. A source electrode of the first field effect transistor is grounded and connected to a source electrode of the second field effect transistor. A drain electrode of the second field effect transistor is connected to the current input of the current-to-voltage conversion circuit. The source electrode of the second field effect transistor is grounded.

Herein, the first field effect transistor and the second field effect transistor are two N-channel Metal Oxide Semiconductor (MOS) field effect transistors. A mirror circuit consisting of two MOS transistors can realize current replication and current purification to ensure the consistency of the second current, thereby further ensuring accuracy of the temperature measurement.

In a practical application, in accordance with a magnitude of a first supply voltage and a magnitude of a control voltage of a gate electrode of a field effect transistor, the first field effect transistor and the second field effect transistor may be two P-channel MOS (PMOS) transistors. In this case, a first PMOS transistor has a source electrode connected to the first voltage source and a grounded drain electrode; and a second PMOS transistor has a source electrode serving as the current input of the current-to-voltage conversion circuit and a grounded drain electrode.

In some embodiments, the current mirror circuit further includes a third field effect transistor and a fourth field effect transistor. The third field effect transistor has a drain electrode connected to the source electrode of the first field effect transistor, a gate electrode connected to a second voltage source, and a grounded source electrode. The fourth field effect transistor has a drain electrode connected to the source electrode of the second field effect transistor, a grounded source electrode, and a gate electrode connected to the output of the comparator. The fourth field effect transistor is controlled to be switched on or off based on the comparison result. When the comparison result is a low level, the fourth field effect transistor is switched off to stop the output of the second current. When the comparison result is high level, the fourth field effect transistor is switched on initiate the output of the second current.

That is, the comparison result is fed back to the gate electrode of the fourth field effect transistor to control the fourth field effect transistor to be switched off or on.

When the fourth field effect transistor is switched on, the source electrode of the second field effect transistor is grounded, and the second bandgap reference circuit outputs the second current. When the fourth field effect transistor is switched off, the source electrode of the second field effect transistor can be regarded as being connected to a high resistance, thereby stopping the output of the second current on this path.

In a practical application, the drain electrode of the first field effect transistor is connected to the first voltage source through the PMOS transistor. The PMOS transistor is switched on when the first voltage source is greater than a threshold voltage of the PMOS transistor. The source electrode of the first field effect transistor and the drain electrode of the third field effect transistor are connected to each other through a resistor. The source electrode of the first field effect transistor and the drain electrode of the third field effect transistor are connected to each other through a resistor. The source electrode of the third field effect transistor and the source electrode of the fourth field effect transistor are both grounded through a resistor.

In some embodiments, the first field effect transistor, the second field effect transistor, the third field effect transistor, the fourth field effect transistor, and the first capacitor may be stacked on each other to further reduce an occupied space of a chip.

In some embodiments, the second bandgap reference circuit is further configured to generate a baseline voltage uncorrelated to the ambient temperature; and a voltage input of the first voltage generation circuit is connected to a voltage output of the second bandgap reference circuit, to obtain the reference voltage by performing a voltage regulation on the baseline voltage.

That is, the second bandgap reference circuit can serve as the voltage stabilization source of the first voltage generation circuit, and output the generated baseline voltage to the voltage stabilization circuit. The voltage stabilization circuit can maintain the baseline voltage at a constant value, i.e., the reference voltage. In this way, the problem of the voltage fluctuation due to the circuit switching can be avoided to ensure the stability of the reference voltage.

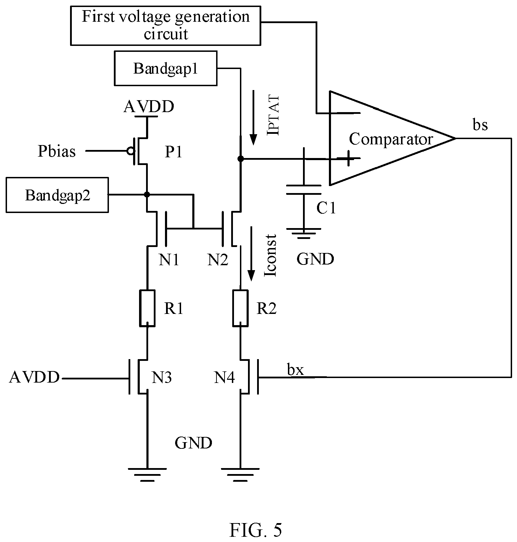

Based on the above implementations, an embodiment of the present disclosure provides a specific second voltage generation circuit. FIG. 5 is a schematic diagram illustrating a third theoretical structure of a temperature measurement circuit according to an embodiment of the present disclosure. As illustrated in FIG. 5, the temperature measurement circuit includes a comparator, a first voltage generation circuit, and a second voltage generation circuit. The second voltage generation circuit includes a current generation circuit and a current-to-voltage conversion circuit.

The current generation circuit includes a first bandgap reference circuit **Bandgap1,** a second bandgap reference circuit **Bandgap2,** and a current mirror circuit.

**Bandgap1** generates a first current $I_{PTAT}$ correlated to temperature. **Bandgap2** generates a second current **Iconst** uncorrelated to temperature.

The current mirror circuit includes a first field effect transistor **N1,** a second field effect transistor **N2,** a third field effect transistor **N3,** and a fourth field effect transistor **N4.** A drain electrode of the first field effect transistor **N1** is connected to a first voltage source **AVDD** through a PMOS transistor **P1.** A gate electrode of the PMOS transistor **P1** is connected to a bias voltage **Pbias.** A current output of **Bandgap2** is connected to a gate electrode and the drain electrode of the first field effect transistor **N1.** The first field effect transistor **N1** is connected to a gate electrode of the second field effect transistor **N2.** A source electrode of the first field effect transistor **N1** is connected to a drain electrode of the third field effect transistor **N3** through a resistor **R1.** A gate electrode **of N3** is connected to a second voltage source **AVDD.** A source electrode of the third field effect transistor **N3** is grounded. A drain electrode of the second field effect transistor **N2** is connected to a current input of a capacitor **C1.** The other end of the capacitor **C1** is grounded. A source electrode of the second field effect transistor **N2** is connected to a drain electrode of the fourth field effect transistor **N4** through a resistor **R2.** A gate electrode **bx** of the fourth field effect transistor **N4** is connected to an output **bs** of the comparator. A source electrode of the fourth field effect transistor **N4** is grounded.

Herein, the current-to-voltage conversion circuit is formed by the capacitor **C1;** $I_{PTAT}$ is a charging current of the capacitor **C1;** and **Iconst** is a discharging current of the capacitor **C1.** If the charging time is defined as **t0** and discharging time is defined as **t1,** the overall charging charges are equal to the overall discharging charges, i.e., $t0*I_{PTAT}=t1*(Iconst-I_{PTAT})$. Therefore, it can be obtained that a duty cycle $\mu$ of the output **bs** satisfies $\mu=t1/(t0+t1)=I_{PTAT}/Iconst$. $I_{PTAT}$ represents that the temperature **Iconst** is uncorrelated to the temperature, and the duty cycle of the output **bs** also represents the temperature, such that the ambient temperature can be determined based on the duty cycle of **bs.**

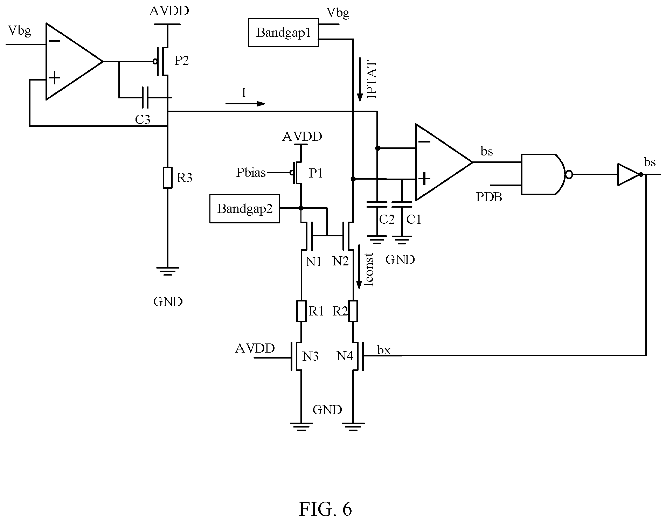

Based on the second voltage generation circuit, an embodiment of the present disclosure further provides a first voltage generation circuit. FIG. 6 is a schematic diagram illustrating a fourth theoretical structure of a temperature measurement circuit according to an embodiment of the present disclosure. As illustrated in FIG. 6, the temperature measurement circuit includes a comparator, a first voltage generation circuit, and a second voltage generation circuit.

The first voltage generation circuit includes a voltage stabilization source and a voltage stabilization circuit. **Bandgap1** serves as the voltage stabilization source to generate a baseline voltage **Vbg.** The voltage stabilization circuit includes an operational amplifier (opamp), a PMOS transistor **P1,** a capacitor **C3,** and a resistor **R3.** A negative input of opamp obtains the baseline voltage **Vbg.** An output of opamp is connected to a gate electrode of the transistor **P2.** The transistor **P2** has a source electrode connected to the voltage source **AVDD** and a drain electrode grounded through the resistor **R3.** Two ends of the capacitor **C2** are connected to the gate electrode and the drain electrode of the transistor **P2,** respectively. A positive input of opamp is connected to the drain electrode of the transistor **P2.** In this way, a feedback path is formed. Therefore, the stability of a voltage of the capacitor **C2,** i.e., the reference voltage, can be ensured after the capacitor **C2** is charged by the output current **I2.**

The second voltage generation circuit includes the current generation circuit and the current-to-voltage conversion circuit. The current generation circuit includes the first bandgap reference circuit **Bandgap1,** the second bandgap reference circuit **Bandgap2,** and the current mirror circuit.

**Bandgap1** can generate a first current $I_{PTAT}$ correlated to the temperature, and **Bandgap2** can generate a second current **Iconst** uncorrelated to the temperature.

The current mirror circuit includes a first field effect transistor **N1,** a second field effect transistor **N2,** a third field effect transistor **N3,** and a fourth field effect transistor **N4.** A drain electrode of the first field effect transistor **N1** is connected to the first voltage source **AVDD** through the PMOS transistor **P1.** A gate electrode of the transistor **P1** is connected to the bias voltage **Pbias.** A current output of **Bandgap2** is connected to the gate electrode and the drain electrode of the first field effect transistor **N1.** The first field effect transistor **N1** is connected to the gate electrode of the second **N2.** A source electrode of the first field effect transistor **N1** is connected to a drain electrode of the third field effect transistor **N3** through a resistor **R1.** A gate electrode of the third field effect transistor **N3** is connected to the second voltage source **AVDD.** A source electrode of the third field effect transistor **N3** is grounded. A drain electrode of the second field effect transistor **N2** is connected to a current input of a capacitor **C1.** The other end of the capacitor **C1** is grounded. A source electrode of the second field effect transistor **N2** is connected to a drain electrode of the fourth field effect transistor **N4** through a resistor **R2.** A gate electrode **bx** of the fourth field effect transistor **N4** is connected to the output **bs** of the comparator. The source electrode **of N4** is grounded. The voltage source according to the embodiments of the present disclosure may be a same voltage source or different voltage sources.

Herein, the current-to-voltage conversion circuit includes the capacitor **C1;** $I_{PTAT}$ is a charging current of the capacitor **C1;** and **Iconst** is a discharging current of the capacitor **C1.**

In some embodiments, the first field effect transistor, the second field effect transistor, the third field effect transistor, the fourth field effect transistor, and the first capacitor may be stacked on each other to further reduce the occupied space of the chip.

In practical applications, the output of the comparator may further have a control output logic circuit disposed thereon. The control output logic circuit includes a NAND gate and a NOT gate. Two inputs of the NAND gate include a comparison result **bs** of the comparator and a control signal **PDB.** When the control signal is a high level, **bs** is controlled to be outputted; and when the control signal is a low level, **bs** is controlled not to be outputted. The outputted **bs** is fed back to the gate electrode of the fourth field effect transistor **N4** and is configured to control the fourth field effect transistor **N4** to be switched on or off, thereby controlling an output of the second current **Iconst.**

In an embodiment of the present disclosure, the first current generated by the first current generation circuit is positively correlated to the ambient temperature. In another embodiment, the first current generated by the first current generation circuit may also be negatively correlated to the ambient temperature.

When temperatures at different points of the chip needs to be detected, with the above temperature measurement circuit, the temperatures at different points can be monitored simply by guiding different IPTATs from the different points of the chip to a core module. In addition, since such a process is a current transmission process, no high requirement is imposed on a length or a width of a transmission line, allowing the process to be easy to implement. Further, only two bandgaps, one opamp, and one comparator are used for the temperature monitoring and conversion, thereby omitting a large number of capacitors. Therefore, compared with a conventional TPS adopting the ADC structure, the area of the chip can be significantly reduced.

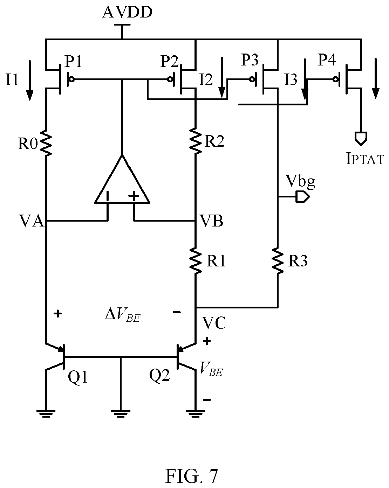

The embodiments of the present disclosure provide schematic structural diagrams of two bandgap reference circuits. FIG. 7 is a schematic structural diagram of a first bandgap reference circuit according to an embodiment of the present disclosure. As illustrated in FIG. 7, the first bandgap reference circuit includes four PMOS transistors **P1, P2, P3** and **P4,** two transistors **Q1** and **Q2,** and resistors **R0, R1, R2** and **R3.**

A mirror structure is formed by the four PMOS transistors **P1, P2, P3** and **P4.** A current **11** on a **P1** path is mirrored to each of **P2, P3** and **P4,** and therefore it is obtained that currents **I2, I3** and **I$_{PTAT}$** are equal to **11.** Since voltages **VA** and **VB** at two ends of opamp are equal, formulas for deriving the baseline voltage **Vbg** and the first current **I$_{PTAT}$** are as below:

$$Vbg = VC + I3 \cdot R3$$
$$= V_{BE} + I2 \cdot R3$$
$$= V_{BE} + \frac{(VB\text{-}VC)}{R1} \cdot R3$$
$$= V_{BE} + \frac{R3}{R1} \cdot \Delta V_{BE}$$

$$I_{PTAT} = I2 = \Delta V_{BE} / R1$$

where $\Delta V_{BE}$ has a positive temperature coefficient that is proportional to the temperature; **I$_{PTAT}$**, similarly, is also proportional to the temperature; $V_{BE}$ has a negative temperature coefficient that is inversely proportional to the temperature; and **Vbg** can be a voltage uncorrelated to the temperature by properly selecting **R3** and **R1.**

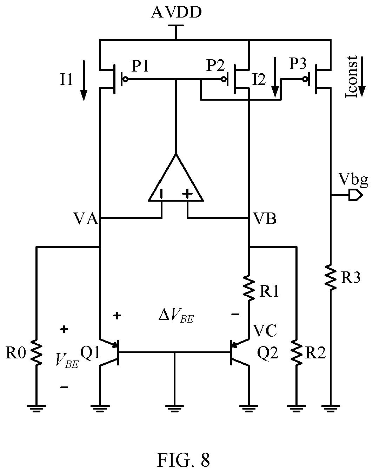

FIG. 8 is a schematic structural diagram illustrating a second bandgap reference circuit according to an embodiment of the present disclosure. As illustrated in FIG. 8, the second bandgap reference circuit includes three PMOS transistors **P1, P2** and **P3,** two transistors **Q1** and **Q2,** and resistors **R0, R1, R2** and **R3.**

A mirror structure is formed by the three PMOS transistors **P1, P2** and **P3.** The current **11** on the **P1** path is mirrored to each of **P2** and **P3,** and therefore it is obtained that currents **I2** and **Iconst** are equal to the current **11.** Since the voltages **VA** and **VB** at the two ends of opamp are equal, formulas for deriving the second current **Iconst** are as below:

$$I_{const} = I2 = I_{R1} + I_{R2}$$
$$= \frac{VB\text{-}VC}{R1} + \frac{VB}{R2}$$
$$= \frac{VA\text{-}VC}{R1} + \frac{VA}{R2}$$
$$= \frac{\Delta V_{BE}}{R1} + \frac{V_{BE}}{R2}$$

where $\Delta V_{BE}$ has a positive temperature coefficient that is proportional to the temperature; $V_{BE}$ has a negative temperature coefficient that is inversely proportional to the temperature; and **Iconst** can be a voltage uncorrelated to the temperature by properly selecting **R3** and **R1.**

As illustrated in FIG. 8, the second bandgap reference circuit can also generate the baseline voltage **Vbg** uncorrelated to the temperature. Therefore, the second bandgap reference circuit may also serve as the voltage source of the first voltage generation circuit to generate the baseline voltage.

With the above temperature measurement circuit, by characterizing the ambient temperature with the current signal correlated to the ambient temperature, a temperature measurement result can be obtained by sampling and processing the current signal. A large number of capacitors, which is required during the sampling and processing of the current signal in an existing temperature measurement circuit, can be omitted, and thus an area of the temperature measurement circuit can be effectively reduced.

The technical solutions described in the embodiments of the present disclosure can be combined with each other arbitrary unless they are contradictory to each other.

It should be understood that, the disclosed embodiments involving the comparator among the several embodiments provided in the present disclosure, the first voltage generation circuit, and the second voltage generation circuit are merely for explaining implementation principles of the temperature measurement circuit of the present disclosure, rather than limiting an actual implementation of the temperature measurement circuit that can be implemented in other ways. The temperature measurement circuit implemented on basis of the above basic principles of the present disclosure shall fall within the protection scope of the present disclosure.

The above are merely several specific embodiments of the present disclosure, while the protection scope of the present disclosure is not limited to these embodiments. Various variants and alternatives without departing from the technical scope of the present disclosure are conceivable to those skilled in the art, and they shall be encompassed by the protection scope of present disclosure.

INDUSTRIAL APPLICABILITY

The embodiments of the present disclosure provide the temperature measurement circuit, including the comparator, the first voltage generation circuit, and the second voltage generation circuit. The first input of the comparator is connected to the output of the first voltage generation circuit and is configured to obtain the reference voltage outputted by the first voltage generation circuit. The second input of the comparator is connected to the output of the second voltage generation circuit and is configured to obtain the comparison voltage outputted by the second voltage generation circuit. The output of the comparator is configured to output the comparison result. The ambient temperature is determined based on the comparison result. The second voltage generation circuit includes the current generation circuit configured to generate the current signal correlated to the ambient temperature, and the current-to-voltage conversion circuit configured to convert the current signal into the comparison voltage. In this way, through characterizing the ambient temperature with the current signal correlated to the ambient temperature, a temperature measurement result can be obtained by sampling and processing the current signal. A large number of capacitors, which is required during the sampling and processing of the current signal in an existing temperature measurement circuit, can be omitted, and thus an area of the temperature measurement circuit can be effectively reduced.

**Claims**

1. A temperature measurement circuit, comprising:

a comparator;
a first voltage generation circuit; and
a second voltage generation circuit, wherein:

a first input of the comparator is connected to an output of the first voltage generation circuit and is configured to obtain a reference voltage outputted by the first voltage generation circuit;
a second input of the comparator is connected to an output of the second voltage generation circuit and is configured to obtain a comparison voltage outputted by the second voltage generation circuit;
an output of the comparator is configured to output a comparison result, an ambient temperature being determined based on the comparison result; and
the second voltage generation circuit comprises a current generation circuit configured to generate a current signal correlated to the ambient temperature, and a current-to-voltage conversion circuit configured to convert the current signal into the comparison voltage.

2. The temperature measurement circuit according to claim 1, wherein:

the current generation circuit comprises a first current generation circuit configured to output a first current correlated to the ambient temperature, and a second current generation circuit configured to output a second current uncorrelated to the ambient temperature;
a current input of the current-to-voltage conversion circuit is connected to a current output of the first current generation circuit and a current output of the second current generation circuit; and
the current-to-voltage conversion circuit is configured to convert a summed current of the first current and the second current into the comparison voltage.

3. The temperature measurement circuit according to claim 2, wherein:

the output of the comparator is connected to a current control of the second current generation circuit; and
the second current generation circuit is configured to output the second current under control of the comparison result.

4. The temperature measurement circuit according to claim 3, wherein:

the current-to-voltage conversion circuit comprises a first capacitor having a first end and a second end, the first end serving as the current input of the current-to-voltage conversion circuit, and the second end being grounded;

in response to the comparison result being a low level, an output of the second current is stopped such that the first capacitor is charged with the first current, until a voltage of the first capacitor is greater than the reference voltage and the comparison result changes to a high level; and

in response to the comparison result being the high level, the second current is outputted, such that the first capacitor is charged with the first current while the first capacitor is discharged with the second current, until the voltage of the first capacitor is smaller than the reference voltage and the comparison result changes to the low level.

5. The temperature measurement circuit according to claim 4, wherein the first current generation circuit comprises a first bandgap reference circuit configured to generate the first current.

6. The temperature measurement circuit according to claim 5, wherein:

the first bandgap reference circuit is further configured to generate a baseline voltage uncorrelated to the ambient temperature; and

a voltage input of the first voltage generation circuit is connected to a voltage output of the first bandgap reference circuit and is configured to obtain the reference voltage by performing a voltage regulation on the baseline voltage.

7. The temperature measurement circuit according to claim 4, wherein the second current generation circuit comprises a second bandgap reference circuit and a current mirror circuit, the second bandgap reference circuit being configured to generate the second current and mirror, through the current mirror circuit, the generated second current to the current input of the current-to-voltage conversion circuit.

8. The temperature measurement circuit according to claim 7, wherein:

the current mirror circuit comprises a first field effect transistor and a second field effect transistor that are connected in a mirroring arrangement;

the first field effect transistor has a gate electrode connected to a current output of the second bandgap reference circuit, a drain electrode connected to the current output of the second bandgap reference circuit and a first voltage source, and a source electrode grounded;

the second field effect transistor has a drain electrode connected to the current input of the current-to-voltage conversion circuit, and a source electrode grounded and connected to the source electrode of the first field effect transistor.

9. The temperature measurement circuit according to claim 8, wherein:

the current mirror circuit further comprises a third field effect transistor and a fourth field effect transistor;

the third field effect transistor has a drain electrode connected to the source electrode of the first field effect transistor, a gate electrode connected to a second voltage source, and a source electrode grounded;

the fourth field effect transistor has a drain electrode connected to the source electrode of the second field effect transistor, a source electrode grounded, and a gate electrode connected to the output of the comparator, the fourth field effect transistor being controlled to be switched on or off based on the comparison result;

in response to the comparison result being the low level, the output of the second current is stopped by switching off the fourth field effect transistor; and

in response to the comparison result being the high level, the second current is outputted by switching on the fourth field effect transistor.

10. The temperature measurement circuit according to any one of claims 2 to 9, wherein the first current generated by the first current generation circuit is positively correlated to the ambient temperature.

FIG. 1

FIG. 2

FIG. 3

FIG. 4

FIG. 5

FIG. 6

FIG. 7

FIG. 8

## INTERNATIONAL SEARCH REPORT

| International application No. |
|---|
| **PCT/CN2021/085931** |

**A.  CLASSIFICATION OF SUBJECT MATTER**

G01K 7/00(2006.01)i

According to International Patent Classification (IPC) or to both national classification and IPC

**B.  FIELDS SEARCHED**

Minimum documentation searched (classification system followed by classification symbols)

G01K; G05F; H03L

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 温度, 测, 传感, 电流, 比较, 不相关, 无关, 第二电流, temperature, sens+, detect+, compar+, second 1w current, independent, dependent

**C.  DOCUMENTS CONSIDERED TO BE RELEVANT**

| Category* | Citation of document, with indication, where appropriate, of the relevant passages | Relevant to claim No. |
|---|---|---|
| PX | CN 111609943 A (GUANGDONG OPPO MOBILE TELECOMMUNICATIONS CORP., LTD.) 01 September 2020 (2020-09-01) claims 1-10 | 1-10 |
| X | US 2014269839 A1 (TAIWAN SEMICONDUCTOR MANUFACTURING COMPANY LTD.) 18 September 2014 (2014-09-18) description, paragraphs 11-21, and figure 1 | 1-10 |
| A | US 5961215 A (ADVANCED MICRO DEVICES INC.) 05 October 1999 (1999-10-05) entire document | 1-10 |
| A | US 6157244 A (ADVANCED MICRO DEVICES INC.) 05 December 2000 (2000-12-05) entire document | 1-10 |
| A | CN 101435724 A (INVENGO INFORMATION TECHNOLOGY CO., LTD.) 20 May 2009 (2009-05-20) entire document | 1-10 |
| A | US 2019278316 A1 (SAMSUNG ELECTRONICS CO., LTD.) 12 September 2019 (2019-09-12) entire document | 1-10 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2021** | **02 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/085931**

### C.    DOCUMENTS CONSIDERED TO BE RELEVANT

| Category* | Citation of document, with indication, where appropriate, of the relevant passages | Relevant to claim No. |
|---|---|---|
| A | US 2004251980 A1 (INFINEON TECHNOLOGIES AG.) 16 December 2004 (2004-12-16) entire document | 1-10 |

Form PCT/ISA/210 (second sheet) (January 2015)

**INTERNATIONAL SEARCH REPORT**
Information on patent family members

International application No.

**PCT/CN2021/085931**

| Patent document cited in search report | | | Publication date (day/month/year) | Patent family member(s) | | | Publication date (day/month/year) |
|---|---|---|---|---|---|---|---|
| CN | 111609943 | A | 01 September 2020 | None | | | |
| US | 2014269839 | A1 | 18 September 2014 | US | 8959994 | B2 | 24 February 2015 |
| US | 5961215 | A | 05 October 1999 | None | | | |
| US | 6157244 | A | 05 December 2000 | None | | | |
| CN | 101435724 | A | 20 May 2009 | CN | 101435724 | B | 01 June 2011 |
| US | 2019278316 | A1 | 12 September 2019 | US | 10642305 | B2 | 05 May 2020 |
| | | | | KR | 20190106190 | A | 18 September 2019 |
| | | | | CN | 110243485 | A | 17 September 2019 |
| US | 2004251980 | A1 | 16 December 2004 | DE | 10157292 | A1 | 05 June 2003 |
| | | | | WO | 03047108 | A3 | 06 November 2003 |
| | | | | EP | 1446884 | A2 | 18 August 2004 |
| | | | | WO | 03047108 | A2 | 05 June 2003 |
| | | | | CN | 100409571 | C | 06 August 2008 |
| | | | | EP | 1446884 | B1 | 28 December 2005 |
| | | | | US | 6992533 | B2 | 31 January 2006 |
| | | | | DE | 50205477 | D1 | 02 February 2006 |
| | | | | CN | 1589528 | A | 02 March 2005 |

Form PCT/ISA/210 (patent family annex) (January 2015)

**REFERENCES CITED IN THE DESCRIPTION**

**Patent documents cited in the description**

- CN 202010393928